(19) Europäisches Patentamt
European Patent Office
Office européen des brevets

(11) **EP 2 661 780 B1**

(12) **FASCICULE DE BREVET EUROPEEN**

(45) Date de publication et mention de la délivrance du brevet:
**20.05.2015 Bulletin 2015/21**

(21) Numéro de dépôt: **12702593.0**

(22) Date de dépôt: **06.01.2012**

(51) Int Cl.:
*H01M 4/485* (2010.01)     *H01M 4/505* (2010.01)
*H01M 4/131* (2010.01)

(86) Numéro de dépôt international:
**PCT/FR2012/050045**

(87) Numéro de publication internationale:
**WO 2012/093239 (12.07.2012 Gazette 2012/28)**

(54) **MATÉRIAU D'ÉLECTRODE POSITIVE BIPHASE POUR ACCUMULATEUR AU LITHIUM ET SON PROCÉDÉ DE SYNTHÈSE**

ZWEIPHASIGES POSITIV-ELEKTRODENMATERIAL FÜR EINE LITHIUMBATTERIE UND VERFAHREN ZU SEINER SYNTHESE

TWO-PHASE POSITIVE ELECTRODE MATERIAL FOR A LITHIUM BATTERY AND METHOD FOR THE SYNTHESIS OF SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2011 FR 1100057**

(43) Date de publication de la demande:
**13.11.2013 Bulletin 2013/46**

(73) Titulaire: **Renault S.A.S.**
**78288 Guyancourt Cedex (FR)**

(72) Inventeurs:
• **SIMONIN, Loïc**
  **F-38100 Grenoble (FR)**
• **BOURBON, Carole**
  **F-38590 Saint Michel De Geoirs (FR)**

• **PATOUX, Sébastien**
  **F-38500 SAINT NICOLAS DE MACHERIN (FR)**
• **DANIEL , Lise**
  **38160 Saint Marcellin (FR)**

(56) Documents cités:
EP-A1- 1 903 627        WO-A1-91/01572
WO-A2-2008/039806      US-A1- 2007 072 081
US-A1- 2008 182 172

• GAO J ET AL: "High capacity Li [Li0.2Mn0.54Ni0.13Co0.13]O2-V2O5 composite cathodes with low irreversible capacity loss for lithium ion batteries", ELECTROCHEMISTRY COMMUNICATIONS, ELSEVIER, AMSTERDAM, NL, vol. 11, no. 1, 1 janvier 2009 (2009-01-01), pages 84-86, XP025839006, ISSN: 1388-2481, DOI: 10.1016/J.ELECOM.2008.10.036 [extrait le 2008-10-29] cité dans la demande

EP 2 661 780 B1

**Description**

**Domaine technique de l'invention**

L'invention concerne un matériau d'électrode positive biphasé pour accumulateur au lithium et son procédé de synthèse.

**État de la technique**

Depuis l'avènement des nouvelles technologies mobiles, le stockage d'énergie électrique est devenu un point essentiel de notre économie. Un regain d'attention est porté vers ces technologies de stockage avec le développement des énergies renouvelables intermittentes ainsi que des véhicules électriques et hybrides. Le développement du marché de ces technologies implique le développement de systèmes de stockage plus sûrs, moins chers, avec des densités d'énergies plus élevées et des durées de vies plus longues.

Aujourd'hui, les accumulateurs au lithium sont l'un des meilleurs candidats pour les applications à haute densité d'énergie et haute puissance. Il est effectivement possible d'obtenir des densités de 200 Wh.kg$^{-1}$, alors que les accumulateurs nickel-hydrure de métal ou plomb-acide offrent respectivement des densités d'énergie de l'ordre de 100 Wh.kg$^{-1}$ et 40Wh.kg$^{-1}$.

Néanmoins, la forte demande en énergie des nouveaux systèmes électroniques portables ainsi que des futures véhicules électriques nécessite de trouver de nouvelles technologies de batteries pouvant dépasser les 200 Wh.kg$^{-1}$ et atteindre des densités d'énergie toujours plus grandes. Or, ceci passe par le développement de nouveaux matériaux d'électrodes, notamment pour l'électrode positive qui reste le facteur limitant.

Pour cela, une des directions possibles est de trouver des matériaux d'électrodes positives ayant une capacité spécifique pouvant dépasser les 200 mAh.g$^{-1}$. Cependant, en général, les accumulateurs au lithium comprenant des matériaux de capacité spécifique élevée comme matériau d'électrode positive ont, en contrepartie, en première décharge, une importante capacité irréversible. Cette forte capacité irréversible est due à une perte en oxygène qui empêche une partie du lithium de se réinsérer dans la structure. Ceci entraîne d'importants problèmes d'équilibrage lors de la réalisation d'accumulateurs Li-Ion face à des électrodes négatives présentant elles-mêmes des capacités irréversibles.

À titre d'exemple, la demande de brevet WO-A-2008/039806 propose une série d'oxydes lamellaires de type $(1-x)Li[Li_{1/3}Mn_{2/3}]O_2 \cdot xLi[Mn_{0,5-y}Ni_{0,5-y}Co_{2y}]O_2$ ayant une structure cristalline de type $O_3$ (groupe d'espace R-3m), avec x compris entre 0 et 1 et y compris entre 0 et 0,5 comme matériau d'électrode positive de haute capacité spécifique. Afin de supprimer les réactions irréversibles entre la surface de l'électrode positive et l'électrolyte pendant la première décharge, la demande de brevet WO-A-2008/039806 propose de modifier la surface desdits oxydes lamellaires par des oxydes, tels que $Al_2O_3$, $ZrO_2$, $CeO_2$, $SiO_2$, $ZnO$, $TiO_2$ et $SnO_2$. En particulier, $Li[Li_{0,20}Mn_{0,54}Ni_{0,13}Co_{0,13}]O_2$, qui est une solution solide entre $[Li_{1/3}Mn_{2/3}]O_2$ et $Li[Mn_{1/3}Ni_{1/3}Co_{1/3}]O_2$, avec une surface modifiée par $Al_2O_3$ présente une capacité spécifique de 285 mAh/g, avec une excellente cyclabilité et une capacité irréversible d'environ 40 mAh/g. Dans ce cas, même si la capacité irréversible est diminuée, elle n'est pas complètement éliminée. J. Gao et al., dans l'article « High capacity Li[Li0,20Mn0,54Ni0,13Co0,13]O2-V2O5, composite cathodes with low irreversible capacity loss for lithium ion batteries » (Electrochemistry Communications 11 (2009) 84-86) proposent de supprimer la capacité irréversible en mélangeant l'oxyde lamellaire $Li[Li_{0,20}Mn_{0,54}Ni_{0,13}Co_{0,13}]O_2$ avec $V_2O_5$ utilisé comme hôte d'insertion pour le lithium libre. Le matériau d'électrode positive est alors obtenu en broyant l'oxyde lamellaire $Li[Li_{0,20}Mn_{0,54}Ni_{0,13}Co_{0,13}]O_2$ avec une quantité prédéterminée de $NH_4VO_3$ et en chauffant le mélange dans l'air à 300°C pendant 4 heures, pour obtenir la phase $V_2O_5$. En étudiant différentes teneurs en $V_2O_5$, les auteurs ont trouvé que les matériaux composites pour électrode positive $Li[Li_{0,20}Mn_{0,54}Ni_{0,13}Co_{0,13}]O_2$-$V_2O_5$ comprenant entre 10% et 12% en poids de $V_2O_5$ ont une capacité en décharge proche de 300 mAh/g avec une très faible perte de capacité irréversible et une bonne cyclabilité.

Par ailleurs, il existe d'autres séries d'oxydes lamellaires à haute capacité. Il s'agit des oxydes lamellaires enrichis en lithium du type $Li_{1+x}Me_{1-x}O_2$, où Me est un ou plusieurs éléments choisis parmi les métaux de transition et $0<x<1/3$. Comme indiqué dans la demande de brevet EP1903627, ce type d'oxydes lamellaires enrichis en lithium peut aussi être formulé sous forme d'oxyde composite : $xLi_2MO_3 \cdot (1-x)LiMeO_2$, avec $0<x<1$. Pour réduire la capacité irréversible des matériaux cathodiques de type $Li_{1+x}Me_{1-x}O_2$ avec x = 0,2 ou plus, il est proposé dans la demande de brevet EP1903627 d'associer, par simple ajout, ces oxydes enrichis en lithium avec un oxyde d'un métal de transition tel que $V_2O_5$ ou $VO_x$ avec $2 \leq x < 2,5$. La demande de brevet US2007072081 divulgue un matériau d'électrode positive comprenant un mélange d'un oxyde Li1.15Ni0.4Co0.3Mn0.3O2 et de LiV2O5.

La demande de brevet WO91/01572 décrit un matériau d'électrode positive comprenant un mélange d'oxyde de manganèse avec un oxyde métallique $LiVO_3$

**Objet de l'invention**

L'objet de l'invention est de proposer un nouveau matériau d'électrode positive pour accumulateur au lithium permettant d'obtenir une capacité spécifique élevée, avec une capacité irréversible au premier cycle nulle ou quasi-nulle sans perte de cyclabilité. De telles caractéristiques sont, avantageusement, obtenues pour des températures de cyclage usuelles (entre 20°C et 55°C) et dans la gamme de potentiels de l'ordre de 2 V à 4,8 V vs. Li$^+$/Li.

Selon l'invention, ce but est atteint par un matériau d'électrode positive biphasé pour accumulateur au lithium constitué par :

- des particules en oxyde lamellaire enrichi en lithium de type $Li_{1+x}(Mn_aNi_bM_c)_{1-x}O_2$
- et un oxyde métallique de type $Li_yVO_z$, recouvrant au moins une partie de la surface des particules en oxyde lamellaire enrichi en lithium,
  où :

  $0,1 \leq x \leq 0,25$,
  $a+b+c = 1$, avec a, b et c non nuls,
  M est un métal choisi parmi le groupe constitué par Mg, Zn, Al, Na, Ca et,
  K,
  $0 < y \leq 3$
  et $2,5 < z < 4$.

De manière préférée, l'oxyde métallique de type $Li_yVO_z$ recouvre totalement la surface des particules en oxyde lamellaire enrichi en lithium.

De plus, selon un développement de l'invention, le matériau d'électrode positive biphasé pour accumulateur au lithium est constitué par un coeur formé d'un oxyde lamellaire enrichi en lithium de type $Li_{1+x}(Mn_aNi_bM_c)_{1-x}O_2$ et par un revêtement formé autour dudit coeur, en oxyde métallique de type $Li_yVO_z$.

Selon l'invention, ce but est également atteint par un procédé de synthèse d'un tel matériau d'électrode positive biphasé pour accumulateur au lithium, la synthèse du matériau d'électrode positive comprenant une étape de mélange en solution aqueuse de l'oxyde lamellaire préalablement synthétisé avec au moins un précurseur de l'oxyde métallique, suivie d'une étape de traitement thermique à une température supérieure ou égale à 280°C.

Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

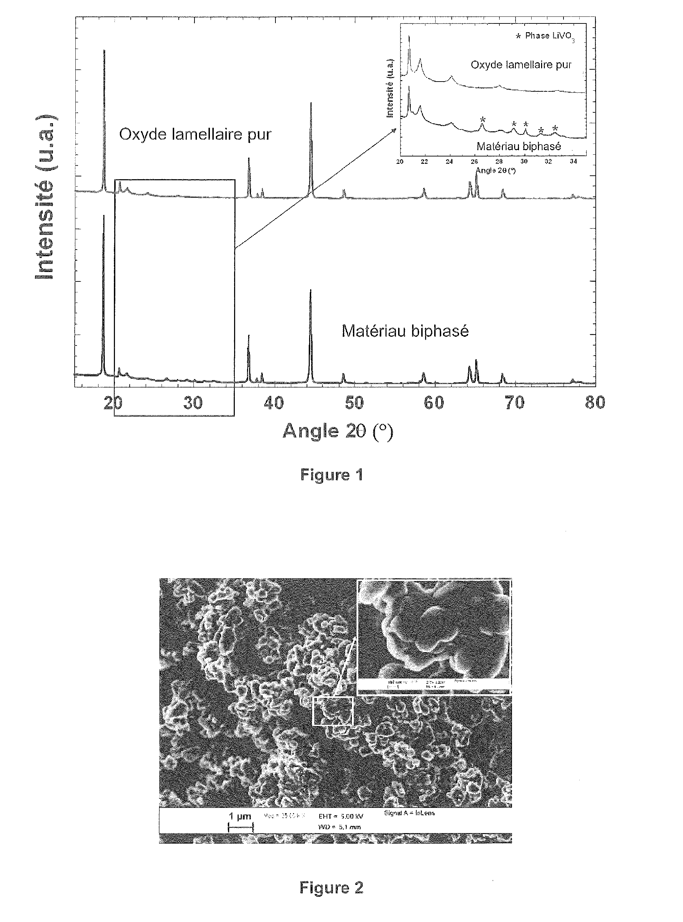

- La figure 1 représente un diagramme de diffraction des rayons X (DRX) du matériau biphasé $Li_{1,2}(Mn_{0,7625}Ni_{0,225}Mg_{0,0125})_{0,8}O_2/LiVO_3$ obtenu selon un procédé de synthèse selon l'invention et de l'oxyde $Li_{1,2}(Mn_{0,7625}Ni_{0,225}Mg_{0,0125})_{0,8}O_2$ seul, avec, en insert, un grossissement d'une partie de ce diffractogramme.
- La figure 2 correspond à une image de Microscopie Electronique à Balayage (MEB) du composé $Li_{1,2}(Mn_{0,7625}Ni_{0,225}Mg_{0,0125})_{0,8}O_2/LiVO_3$ obtenu selon un procédé de synthèse selon l'invention grossi 25000 fois, avec en insert une image MEB du même échantillon grossi 250000 fois.

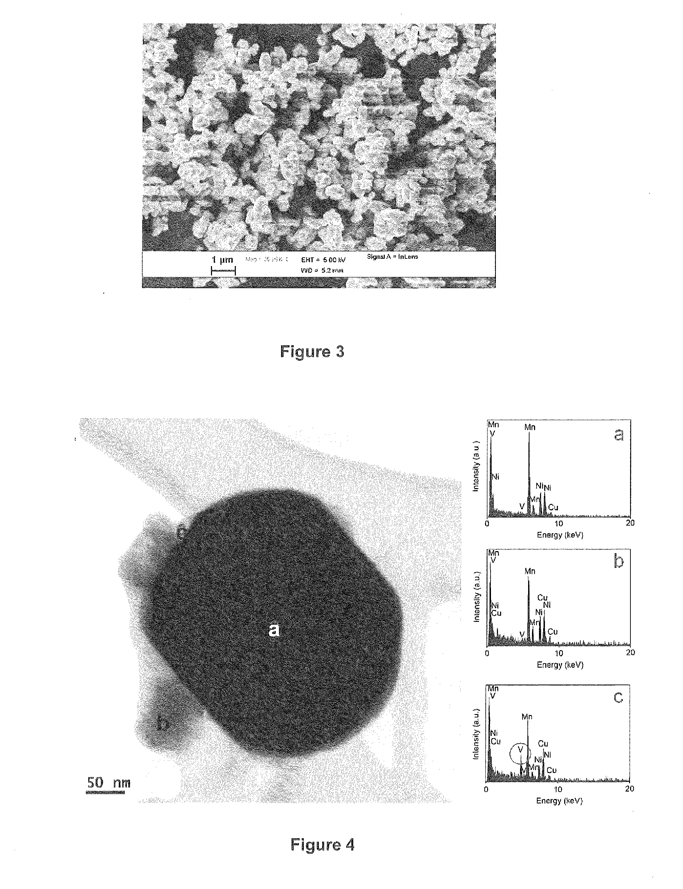

- La figure 3 correspond à une image de Microscopie Electronique à Balayage (MEB) du composé $Li_{1,2}(Mn_{0,7625}Ni_{0,225}Mg_{0,0125})_{0,8}O_2$ seul grossi 25000 fois.
- La figure 4 correspond à une image de Microscopie Electronique en Transmission (MET) du composé $Li_{1,2}(Mn_{0,7625}Ni_{0,225}Mg_{0,0125})_{0,8}O_2/LiVO_3$ synthétisé, grossi 200000 fois, avec en insert trois graphiques a, b et c correspondant respectivement à des spectres d'analyse dispersive en énergie (EDS) collectés aux points a, b et c de l'image.

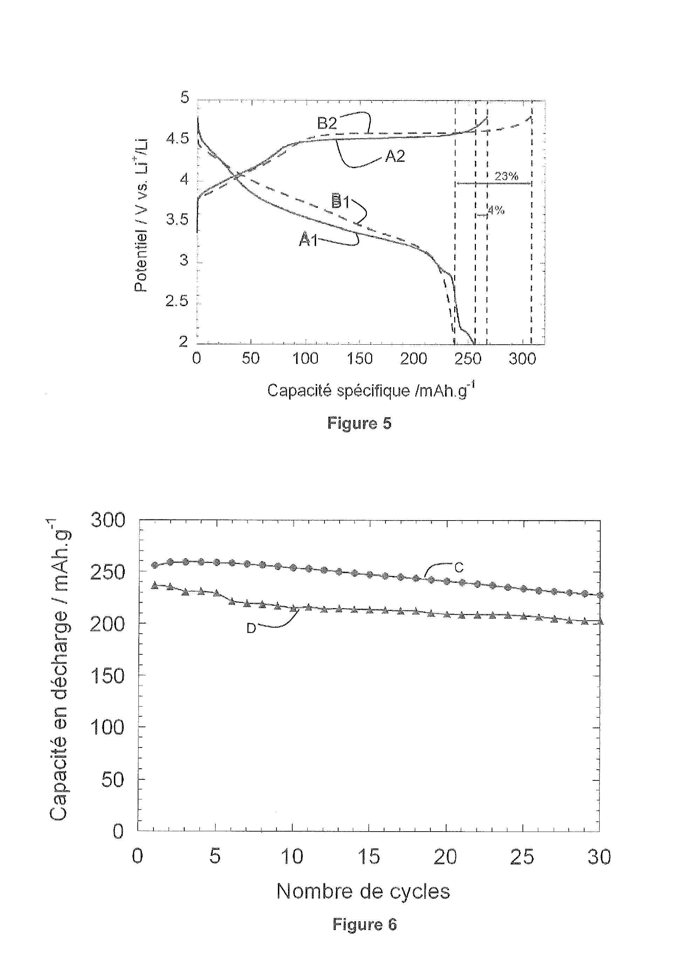

- La figure 5 représente l'évolution du potentiel en fonction de la capacité spécifique de la première décharge et de la première charge en mode galvanostatique (régime C/10, 25°C), de deux accumu lateurs Li-Métal comprenant respectivement $Li_{1,2}(Mn_{0,7625}Ni_{0,225}Mg_{0,0125})_{0,8}O_2/LiVO_3$ (courbes A1 et A2) et $Li_{1,2}(Mn_{0,7625}Ni_{0,225}Mg_{0,0125})_{0,8}O_2$ (Courbes B1 et B2) comme matériaux actifs d'électrode positive.
- La figure 6 représente l'évolution de la capacité spécifique en décharge en fonction du nombre de cycles en mode galvanostatique (régime C/10, 25°C), d'accumulateurs Li-Métal comprenant respectivement $Li_{1,2}(Mn_{0,7625}Ni_{0,225}Mg_{0,0125})_{0,8}O_2/LiVO_3$ (courbe C) et $Li_{1,2}(Mn_{0,7625}Ni_{0,225}Mg_{0,0125})_{0,8}O_2$ (Courbe D) comme matériaux actifs d'électrode positive.

**Description de modes particuliers de réalisation**

Un nouveau matériau d'électrode positive pour accumulateur au lithium obtenu, de préférence, par un procédé de synthèse original est proposé pour obtenir une capacité spécifique élevée, avec une capacité irréversible au premier cycle nulle ou quasi-nulle et sans perte de cyclabilité. De telles caractéristiques sont, avantageusement, obtenues pour des températures de cyclage usuelles (entre 20°C et 55°C) et dans la gamme de potentiels de l'ordre de 2 V à 4,8 V vs. Li⁺/Li.

Ce matériau d'électrode positive pour accumulateur au lithium est, plus particulièrement, un matériau biphasé, présentant une structure particulière.

La première phase du matériau biphasé est constituée de particules en oxyde lamellaire enrichi en lithium répondant à la formule spécifique :

$$Li_{1+x}(Mn_aNi_bM_c)_{1-x}O_2$$

avec :

$0,1 \leq x \leq 0,25$,
a+b+c =1, avec a, b et c non nuls,

M est un métal choisi parmi le groupe constitué par Mg, Zn, Al, Na, Ca, K. À titre d'exemple, l'oxyde lamellaire peut répondre à la formule $Li_{1,2}(Mn_{0,7625}Ni_{0,225}Mg_{0,0125})_{0,8}O_2$.

La seconde phase du matériau biphasé est constituée d'un oxyde métallique répondant à la formule suivante $Li_yVO_z$, avec $0< y \leq 3$ et $2,5< z <4$. L'oxyde métallique est, avantageusement, constitué par $LiVO_3$. Il est, de plus, de préférence, au moins partiellement sous forme cristallisée.

Par ailleurs, cette seconde phase constituée d'un oxyde métallique répondant à la formule $Li_yVO_z$ recouvre au moins en partie et, de manière préférée la totalité, de la surface des particules en oxyde lamellaire enrichi en lithium. De plus, le pourcentage massique d'oxyde métallique de type $Li_yVO_z$ est, avantageusement, compris entre 5% et 15% et préférentiellement entre 8% et 13% par rapport au poids total du matériau biphasé, le reste étant constitué par l'oxyde lamellaire enrichi en lithium.

Un tel matériau biphasé et plus particulièrement la structure particulière dudit matériau biphasé, c'est-à-dire un matériau pulvérulent constitué de particules en oxyde lamellaire enrichi en lithium formant un coeur, dont la surface est au moins en partie, et avantageusement totalement, recouverte par l'oxyde métallique $Li_yVO_z$, ont, en particulier, été obtenus à l'aide d'un procédé de synthèse mettant en jeu un mélange par voie aqueuse. En particulier, l'oxyde lamellaire enrichi en lithium est mélangé avec au moins un précurseur de l'oxyde métallique de type $Li_yVO_z$ mis en solution aqueuse. Puis, l'oxyde métallique de type $Li_yVO_z$ est synthétisé par traitement thermique à une température supérieure ou égale à 280°C et avantageusement comprise entre 300°C et 600°C. Le traitement thermique est, avantageusement, réalisé sur un produit pulvérulent sec, obtenu après séchage du mélange formé par voie aqueuse.

Le matériau biphasé obtenu présente les avantages suivants :

- matériau très homogène,
- matériau à haute capacité spécifique du fait de la présence de l'oxyde lamellaire enrichi en lithium,
- matériau présentant une capacité irréversible au premier cycle nulle ou quasi nulle, sans perte de cyclabilité, du fait de la présence de l'oxyde métallique particulier $Li_yVO_z$ avec $0< y \leq 3$ et $2,5< z <4$.

Par ailleurs, le procédé particulier de synthèse permettant d'obtenir un tel matériau biphasé est très facile à mettre en oeuvre et peu consommateur en énergie, contrairement aux procédés de l'art antérieur qui mettent en jeu des mélanges mécaniques de poudres.

Dans le procédé particulier de synthèse évoqué ci-dessus, le précurseur de l'oxyde métallique de type $Li_yVO_z$ est avantageusement choisi parmi $NH_4VO_3$ et $NaVO_3$.

De plus, avant son mélange avec au moins un précurseur de l'oxyde métallique de type $Li_yVO_z$, l'oxyde lamellaire enrichi en lithium peut être synthétisé en réalisant un traitement thermique d'un mélange comprenant :

- du carbonate de manganèse,
- du carbonate de nickel,
- d'un composé choisi parmi un carbonate, un sulfate et un nitrate et comprenant le métal M,
- et d'une source de lithium choisie parmi du carbonate de lithium et de l'hydroxyde de lithium.

Le traitement thermique mis en jeu pour la synthèse de l'oxyde lamellaire enrichi en lithium consiste à chauffer ledit mélange jusqu'à une température supérieure ou égale à 800°C et avantage usement comprise entre 900°C et 1100°C. Il est, ensuite, suivi d'un refroidissement, tel qu'une trempe, par exemple dans de l'eau ou de l'azote liquide, ou bien tel qu'un refroidissement à l'air ambiant.

Selon un mode particulier de réalisation, le matériau biphasé $Li_{1,2}(Mn_{0,7625}Ni_{0,225}Mg_{0,0125})_{0,8}O_2$-$LiVO_3$ a été synthétisé, puis testé comme matériau d'électrode positive pour accumulateur au lithium.

En premier lieu, l'oxyde lamellaire enrichi en lithium répondant à la formule $Li_{1,2}(Mn_{0,7625}Ni_{0,225}Mg_{0,0125})_{0,8}O_2$ est synthétisé en mélangeant intimement 13,70 g de $Li_2CO_3$, 21,06 g de $MnCO_3$, 6,69g de $NiCO_3$ et 0,739g de $MgSO_4$ et en chauffant ce mélange à 1000°C pendant 24h, puis en le refroidissant très rapidement (par exemple par trempe).

En second lieu, une partie de l'oxyde lamellaire enrichi en lithium ainsi synthétisé est ensuite mélangée avec une solution aqueuse de $NH_4VO_3$. En particulier, cette étape est réalisée selon le protocole suivant :

- 2 grammes de l'oxyde lamellaire $Li_{1,2}(Mn_{0,7625}Ni_{0,225}Mg_{0,0125})_{0,8}O_2$ préalablement synthétisé sont mis en suspension dans 10mL d'une solution aqueuse de $NH_4VO_3$ à 0,25 M, obtenue par dissolution de 0,283g de $NH_4VO_3$ dans 10mL d'$H_2O$, à 80°C pendant 4 heures.
- Une fois la mise en suspension réalisée, la solution est maintenue sous agitation, pendant 24 heures à 80°C, afin de réaliser un séchage par évaporation.
- La poudre obtenue est ensuite traitée thermiquement à une température de 300°C, sous air et pendant 4 heures, pour obtenir un composé pulvérulent.

Le composé pulvérulent obtenu et l'oxyde lamellaire pur $Li_{1,2}(Mn_{0,7625}Ni_{0,225}Mg_{0,0125})_{0,8}O_2$ préalablement synthétisé (appelé ci-après oxyde lamellaire pur) ont chacun été caractérisés par diffraction des rayons X (figure 1).

Ainsi, le spectre de diffraction des rayons X du composé pulvérulent, en comparaison à celui de l'oxyde lamellaire pur ($Li_{1,2}(Mn_{0,7625}Ni_{0,225}Mg_{0,0125})_{0,8}O_2$), montre non seulement que la phase $Li_{1,2}(Mn_{0,7625}Ni_{0,225}Mg_{0,0125})_{0,8}O_2$ est préservée, mais aussi la présence d'une phase cristalline $LiVO_3$. En particulier, l'analyse réalisée par affinement selon la méthode de Rietveld du diagramme de diffraction par rayons X (voir grossissement sur la figure 1 correspondant à la partie encadrée) permet de déterminer un pourcentage massique de $LiVO_3$ en phase cristalline de 8,9%. Ce pourcentage massique de $LiVO_3$ en phase cristalline, comparé au pourcentage massique théorique attendu de $LiVO_3$ de 13%, laisse supposer l'existence d'une part d'oxyde métallique de type $Li_xVO_y$ sous forme amorphe avec $0 < y \leq 3$ et $2,5 < z < 4$ et potentiellement de $LiVO_3$ sous forme amorphe.

De plus, le matériau biphasé et l'oxyde lamellaire pur ont été chacun observés par microscopie électronique à balayage (MEB). Ainsi, le cliché selon la figure 2, représentant le composé pulvérulent obtenu après mélange avec $NH_4VO_3$ en solution aqueuse et traitement thermique, montre des particules d'une taille moyenne de l'ordre de 300 nm, faiblement agglomérées. Cette morphologie ne diffère pas de celle observée pour l'oxyde lamellaire pur (voir figure 3). Le procédé de synthèse utilisé pour former le composé pulvérulent permet donc de préserver la morphologie de l'oxyde lamellaire pur sous forme de particules, tout en obtenant un matériau composite très homogène.

Une caractérisation du matériau biphasé par microscopie électronique en transmission (MET) confirme la taille moyenne observée par MEB (voir figure 4). De plus, une analyse dispersive en énergie (EDS) effectuée au centre des particules (points a et b sur figure 4) et à la surface (point c sur figure 4) met en évidence la présence de la phase $Li_yVO_z$ à la surface des particules d'oxyde lamellaire enrichi en lithium.

En particulier, il est possible d'estimer l'épaisseur du revêtement de la phase $Li_yVO_z$ à la surface des particules en oxyde lamellaire entre 3nm et 15nm.

Une fois synthétisé, le matériau biphasé $Li_{1,2}(Mn_{0,7625}Ni_{0,225}Mg_{0,0125})_{0,8}O_2$-$LiVO_3$ a été testé comme matériau d'électrode positive pour accumulateur au lithium. En particulier, un premier accumulateur au lithium de type « pile bouton » a été réalisé avec :

- une électrode négative en lithium de 16 mm de diamètre et de 135 $\mu$m d'épaisseur,
- une électrode positive de 14 mm de diamètre comprenant le matériau composite $Li_{1,2}(Mn_{0,7625}Ni_{0,225}Mg_{0,0125})_{0,8}O_2$/$LiVO_3$ (80% en masse), du noir de carbone (10% en masse), et de l'hexafluorure de polyvinylidène (10% en masse), le tout étant déposé sur un collecteur de courant formé par une feuille en aluminium de 20 $\mu$m d'épaisseur, et
- un séparateur imbibé d'un électrolyte liquide composé d'une solution de $LiPF_6$ (1 mol.$L^{-1}$) dans un mélange de carbonate d'éthylène et de carbonate de diméthyle.

Un second accumulateur au lithium a été réalisé à titre de comparaison avec les mêmes constituants que le premier accumulateur au lithium, à l'exception du matériau actif de l'électrode positive. Dans ce second accumulateur au lithium, le matériau actif de l'électrode positive est formé par l'oxyde lamellaire pur.

Sur la figure 5, les courbes A1 et B2 montrent l'évolution du potentiel en fonction de la capacité spécifique, lors de la première charge, respectivement pour les premier et second accumulateurs au lithium et les courbes A2 et B2 montrent l'évolution du potentiel en fonction de la capacité spécifique, lors de la première décharge, respectivement pour les premier et second accumulateurs au lithium. Ces courbes montrent une diminution très significative de la capacité irréversible (passage de 23% à 4%) au premier cycle, due à l'ajout de la phase $LiVO_3$.

De plus, sur la figure 6, les courbes C et D représentent l'évolution de la capacité spécifique en décharge respectivement pour les premier et second accumulateurs, en fonction du nombre de cycles en mode galvanostatique (régime C/10, 25°C). Ces courbes montrent que le matériau biphasé présente une capacité spécifique très élevée ainsi qu'une très bonne cyclabilité.

**Revendications**

1. Matériau d'électrode positive biphasé pour accumulateur au lithium constitué par :

   - des particules en oxyde lamellaire enrichi en lithium de type $Li_{1+x}(Mn_aNi_bM_c)_{1-x}O_2$
   - et un oxyde métallique de type $Li_yVO_z$, recouvrant au moins une partie de la surface des particules en oxyde lamellaire enrichi en lithium,
   où :

$$0,1 \leq x \leq 0,25,$$

   a+b+c =1, avec a, b et c non nuls,

   M est un métal choisi parmi le groupe constitué par Mg, Zn, Al, Na, Ca et, K,
   $0<y\leq3$
   et $2,5< z <4$.

2. Matériau selon la revendication 1, **caractérisé en ce que** l'oxyde métallique répond à la formule $LiVO_3$.

3. Matériau selon l'une des revendications 1 et 2, **caractérisé en ce que** l'oxyde lamellaire répond à la formule $Li_{1,2}(Mn_{0,7625}Ni_{0,225}Mg_{0,0125})_{0,8}O_2$.

4. Matériau selon l'une quelconque des revendications 1 à 3, **caractérisé en ce que** le pourcentage massique d'oxyde métallique de type $Li_yVO_z$ est compris entre 5% et 15% par rapport au poids total du matériau.

5. Matériau selon l'une quelconque des revendications 1 à 4, **caractérisé en ce que** l'oxyde métallique de type $Li_yVO_z$ est au moins en partie sous forme cristallisée.

6. Matériau selon l'une quelconque des revendications 1 à 5, **caractérisé en ce que** l'oxyde métallique de type $Li_yVO_z$ forme un revêtement d'une épaisseur comprise entre 3nm et 15nm à la surface des particules en oxyde lamellaire enrichi en lithium.

7. Procédé de synthèse d'un matériau d'électrode positive biphasé pour accumulateur au lithium constitué de particules en oxyde lamellaire enrichi en lithium de type $Li_{1+x}(Mn_aNi_bM_c)_{1-x}O_2$ et d'oxyde métallique de type $Li_yVO_z$, recouvrant au moins une partie de la surface des particules en oxyde lamellaire enrichi en lithium,
   où :

$$0,1 \leq x \leq 0,25,$$

   a+b+c =1, avec a, b et c non nuls,
   M est un métal choisi parmi le groupe constitué par Mg, Zn, Al, Na, Ca et, K,
   $0< y \leq3$
   et $2,5< z <4$,

la synthèse du matériau d'électrode positive comprenant une étape de mélange de l'oxyde lamellaire enrichi en lithium avec au moins un précurseur de l'oxyde métallique mis en solution aqueuse, suivie d'une étape de traitement thermique à une température supérieure ou égale à 280°C.

8. Procédé selon la revendication 7, **caractérisé en ce que** le précurseur de l'oxyde métallique est choisi parmi $NH_4VO_3$ et $NaVO_3$.

9. Procédé selon l'une des revendications 7 et 8, **caractérisé en ce que** l'oxyde métallique répond à la formule $LiVO_3$.

10. Procédé selon l'une quelconque des revendications 7 à 9, **caractérisé en ce que** l'oxyde lamellaire enrichi en lithium est obtenu en réalisant un traitement thermique d'un mélange pulvérulent comprenant :

   - du carbonate de manganèse,
   - du carbonate de nickel,
   - d'un composé choisi parmi un carbonate, un sulfate et un nitrate et comprenant le métal M
   - et d'une source de lithium choisie parmi du carbonate de lithium et de l'hydroxyde de lithium,

   à une température supérieure ou égale à 800°C, suivi d'un refroidissement.

11. Procédé selon la revendication 10, **caractérisé en ce que** le refroidissement est un refroidissement par trempe ou à l'air ambiant.

12. Procédé selon l'une des revendications 7 à 11, **caractérisé en ce que** l'oxyde lamellaire répond à la formule $Li_{1,2}(Mn_{0,7625}Ni_{0,225}Mg_{0,0125})_{0,8}O_2$.

**Patentansprüche**

1. Zweiphasiges Positivelektrodenmaterial für eine Lithiumbatterie, bestehend aus:

   - Teilchen aus lithiumangereichertem Schichtoxid des Typs $Li_{1+x}(Mn_aNi_bM_c)_{1-x}O_2$
   - und einem Metalloxid des Typs $Li_yVO_z$, das mindestens einen Teil der Oberfläche der Teilchen aus lithiumangereichertem Schichtoxid bedeckt, wobei:

$$0,1 \leq x \leq 0,25,$$

   a + b + c = 1, wobei a, b und c nicht Null sind,
   M für ein Metall aus der Gruppe bestehend aus Mg, Zn, Al, Na, Ca und K steht,
   $0 < y \leq 3$
   und 2,5 < z < 4.

2. Material nach Anspruch 1, **dadurch gekennzeichnet, dass** das Metalloxid der Formel $LiVO_3$ entspricht.

3. Material nach einem der Ansprüche 1 und 2, **dadurch gekennzeichnet, dass** das Schichtoxid der Formel $Li_{1,2}(Mn_{0,7625}Ni_{0,225}Mg_{0,0125})_{0,8}O_2$ entspricht.

4. Material nach einem der Ansprüche 1 bis 3, **dadurch gekennzeichnet, dass** der Massenprozentanteil des Metalloxids des Typs $Li_yVO_z$ zwischen 5 und 15%, bezogen auf das Gesamtgewicht des Materials, liegt.

5. Material nach einem der Ansprüche 1 bis 4, **dadurch gekennzeichnet, dass** das Metalloxid des Typs $Li_yVO_z$ zumindest teilweise in kristalliner Form vorliegt.

6. Material nach einem der Ansprüche 1 bis 5, **dadurch gekennzeichnet, dass** das Metalloxid des Typs $Li_yVO_z$ auf der Oberfläche der Teilchen aus lithiumangereichertem Schichtoxid einen Überzug mit einer Dicke zwischen 3 nm und 15 nm bildet.

7. Verfahren zur Synthese eines zweiphasigen Positivelektrodenmaterials für eine Lithiumbatterie, bestehend aus: Teilchen aus lithiumangereichertem Schichtoxid des Typs $Li_{1+x}(Mn_aNi_bM_c)_{1-x}O_2$ und Metalloxid des Typs $Li_yVO_z$, das mindestens einen Teil der Oberfläche der Teilchen aus lithiumangereichertem Schichtoxid bedeckt, wobei:

$$0,1 \leq x \leq 0,25,$$

a + b + c = 1, wobei a, b und c nicht Null sind,
M für ein Metall aus der Gruppe bestehend aus Mg, Zn, Al, Na, Ca und K steht,
$0 < y \leq 3$
und $2,5 < z < 4,$
wobei die Synthese des Positivelektrodenmaterials einen Schritt des Mischens des lithiumangereicherten Schichtoxids mit mindestens einem Vorläufer des Metalloxids in wässriger Lösung gefolgt von einem Schritt des Wärmebehandelns bei einer Temperatur größer gleich 280°C umfasst.

8. Verfahren nach Anspruch 7, **dadurch gekennzeichnet, dass** der Vorläufer des Metalloxids aus $NH_4VO_3$ und $NaVO_3$ ausgewählt wird.

9. Verfahren nach einem der Ansprüche 7 und 8, **dadurch gekennzeichnet, dass** das Metalloxid der Formel $LiVO_3$ entspricht.

10. Verfahren nach einem der Ansprüche 7 bis 9, **dadurch gekennzeichnet, dass** das lithiumangereicherte Schichtoxid durch Durchführung einer Wärmebehandlung einer pulverförmigen Mischung, umfassend:

- Mangancarbonat,
- Nickelcarbonat,
- eine Verbindung, die aus einem Carbonat, einem Sulfat und einem Nitrat ausgewählt ist und das Metall M umfasst,
- eine Lithiumquelle, die aus Lithiumcarbonat und Lithiumhydroxid ausgewählt ist,

bei einer Temperatur größer gleich 800°C und anschließendes Abkühlen erhalten wird.

11. Verfahren nach Anspruch 10, **dadurch gekennzeichnet, dass** es sich bei dem Abkühlen um ein Abkühlen durch Abschrecken oder mit Umgebungsluft handelt.

12. Verfahren nach einem der Ansprüche 7 bis 11, **dadurch gekennzeichnet, dass** das Schichtoxid der Formel $Li_{1,2}(Mn_{0,7625}Ni_{0,225}Mg_{0,0125})_{0,8}O_2$ entspricht.

**Claims**

1. Two-phase positive electrode material for a lithium battery consisting of:

- particles of lithium-enriched layered oxide of $Li_{1+x}(Mn_aNi_bM_c)_{1-x}O_2$ type,
- and a metal oxide of $Li_yVO_z$ type, covering at least a portion of the surface of the particles of lithium-enriched layered oxide,
where:

$$0.1 \leq x \leq 0.25,$$

a + b + c = 1, with a, b and c non-zero,
M is a metal chosen from the group consisting of Mg, Zn, Al, Na, Ca and K,
$0 < y \leq 3$
and $2.5 < z < 4.$

**2.** Material according to Claim 1, **characterized in that** the metal oxide corresponds to the formula $LiVO_3$.

**3.** Material according to either of Claims 1 and 2, **characterized in that** the layered oxide corresponds to the formula $Li_{1,2}(Mn_{0,7625}Ni_{0,225}Mg_{0,0125})_{0,8}O_2$.

**4.** Material according to any one of Claims 1 to 3, **characterized in that** the percentage by weight of metal oxide of $Li_yVO_z$ type is between 5% and 15%, with respect to the total weight of the material.

**5.** Material according to any one of Claims 1 to 4, **characterized in that** the metal oxide of $Li_yVO_z$ type is at least partially in the crystalline form.

**6.** Material according to any one of Claims 1 to 5, **characterized in that** the metal oxide of $Li_yVO_z$ type forms a coating with a thickness of between 3 nm and 15 nm at the surface of the particles of lithium-enriched layered oxide.

**7.** Process for the synthesis of a two-phase positive electrode material for a lithium battery composed of particles of lithium-enriched layered oxide of $Li_{1,x}(Mn_aNi_bM_c)_{1-x}O_2$ type and of metal oxide of $Li_yVO_z$ type, covering at least a portion of the surface of the particles of lithium-enriched layered oxide,
where:

$$0.1 \leq x \leq 0.25,$$

$a + b + c = 1$, with a, b and c non-zero,
M is a metal chosen from the group consisting of Mg, Zn, Al, Na, Ca and K,
$0 < y \leq 3$
and $2.5 < z < 4$,
the synthesis of the positive electrode material comprising a stage of mixing the lithium-enriched layered oxide with at least one precursor of the metal oxide placed in aqueous solution, followed by a stage of heat-treatment at a temperature of greater than or equal to 280°C.

**8.** Process according to Claim 7, **characterized in that** the precursor of the metal oxide is chosen from $NH_4VO_3$ and $NaVO_3$.

**9.** Process according to either of Claims 7 and 8, **characterized in that** the metal oxide corresponds to the formula $LiVO_3$.

**10.** Process according to any one of Claims 7 to 9, **characterized in that** the lithium-enriched layered oxide is obtained by carrying out a heat-treatment on a pulverulent mixture comprising:

- manganese carbonate,
- nickel carbonate,
- a compound chosen from a carbonate, a sulfate and a nitrate and comprising the metal M,
- and a lithium source chosen from lithium carbonate and lithium hydroxide,

at a temperature of greater than or equal to 800°C, followed by a cooling.

**11.** Process according to Claim 10, **characterized in that** the cooling is a cooling by quenching or with ambient air.

**12.** Process according to one of Claims 7 to 11, **characterized in that** the layered oxide corresponds to the formula $Li_{1,2}(Mn_{0,7625}Ni_{0,225}Mg_{0,0125})_{0,8}O_2$.

Figure 1

Figure 2

Figure 3

Figure 4

Figure 5

Figure 6

## RÉFÉRENCES CITÉES DANS LA DESCRIPTION

**Documents brevets cités dans la description**

- WO 2008039806 A
- EP 1903627 A
- US 2007072081 A
- WO 9101572 A

**Littérature non-brevet citée dans la description**

- **J. GAO et al.** High capacity Li[Li0,20Mn0,54Ni0,13Co0,13]O2-V2O5, composite cathodes with low irreversible capacity loss for lithium ion batteries. *Electrochemistry Communications,* 2009, vol. 11, 84-86